# EUROPÄISCHE PATENTANMELDUNG

(11) **EP 2 416 073 A2**
(43) Veröffentlichungstag der Anmeldung: **08.02.2012**
(21) Anmeldenummer: 11175996.5
(22) Anmeldetag: 29.07.2011
(51) Int. Cl.: F24D 11/00, F24D 12/02, F24D 19/10

(54) **Verfahren und Vorrichtung zum Erwärmen eines Fluids in einem Pufferspeicher**

(30) Priorität: 06.08.2010 DE 102010033620
(71) Anmelder: Robert Bosch GmbH, 70469 Stuttgart (DE)
(72) Erfinder: Eppler, Marc, 72406 Bisingen (DE); Kreeb, Christoph, 64853 Otzberg (DE)

(57) **Zusammenfassung**

Die Erfindung betrifft ein Verfahren zum Erwärmen eines Fluids (2) in einem Pufferspeicher (10) nach dem Oberbegriff des Patentanspruchs 1 sowie eine Heizeinrichtung (1) nach dem Oberbegriff des Patentanspruchs 14.

Es ist Aufgabe der Erfindung, den Effizienzgrad einer Heizungsanlage zu verbessern, ohne dass es zu Komforteinbußen für einen Wärmeverbraucher (92) kommt. Weiterhin sollen Verschleiß und Emissionen verhindert, sowie die weiteren Nachteile des Standes der Technik beseitigt werden.

Die Erfindung sieht ein Verfahren zum Erwärmen eines Fluids (2) in einem Pufferspeicher (10) vor, der einen Bereitschaftsbereich (11) und einen Vorwärmbereich umfasst. Der Bereitschaftsbereich (11) wird in der Regel von einem ersten Wärmeerzeuger (20) höher temperiert als der Vorwärmbereich. Eine Mess- und Regeleinrichtung (3) steuert und regelt den ersten Wärmeerzeuger (20) und wenigstens eine erste Pumpe (21). Der Vorwärmbereich ist in wenigstens einen ersten Vorwärmbereich (12) und einen zweiten Vorwärmbereich (13) unterteilt. Eine erste Grenze (14) zwischen dem Bereitschaftsbereich (11) und dem ersten Vorwärmbereich (12) ist durch eine Höhe (36) eines ersten Temperaturfühlers (30) festgelegt und eine zweite Grenze (15) zwischen dem ersten Vorwärmbereich (12) und dem zweiten Vorwärmbereich (13) ist durch eine Höhe (37) eines zweiten Temperaturfühlers (31) festgelegt. Die Mess- und Regeleinrichtung (3) erfasst über den ersten Temperaturfühler (30) eine Temperatur (T1), den zweiten Temperaturfühler (31) eine Temperatur (T2) und wenigstens einem dritten Temperaturfühler (32) eine Temperatur (T3).

## Beschreibung

Die Erfindung betrifft ein Verfahren zum Erwärmen eines Fluids in einem Pufferspeicher nach dem Oberbegriff des Patentanspruchs 1 sowie eine Heizeinrichtung nach dem Oberbegriff des Patentanspruchs 14.

Pufferspeicher sind allgemein bekannter Stand der Technik. Weiterhin sind Warmwasserspeicher bekannt. Diese unterscheiden sich im Wesentlichen von Pufferspeichern dadurch, dass aus Pufferspeichern keine Brauchwasserentnahme erfolgt und diese mit einem Wärmeträger befüllt sind. Bei beiden ist das Speichermedium in der Regel Wasser, das von einem oder mehreren Wärmeerzeugern erwärmt wird.

Solar unterstützte Pufferspeicher umfassen einen Speicherbehälter mit einem oben angeordneten Bereitschaftsbereich und einem darunter angeordneten Vorwärmbereich. Das im Bereitschaftsbereich bevorratete Pufferwasservolumen wird in der Regel von einem fossil gefeuerten, ersten Wärmeerzeuger erwärmt und auf Solltemperatur temperiert. Das im Vorwärmbereich bevorratete Wasservolumen wird in der Regel von einem mit Solarenergie betriebenen, zweiten Wärmeerzeuger auf niedrigere Temperaturen vorgewärmt. Bei einer Wärmeentnahme über eine Vorlaufleitung zu einem angeschlossenen Verbraucher wird Wasser aus dem Bereitschaftsbereich abgezogen und durch in der Regel niedriger temperiertes Wasser aus dem Vorwärmbereich ersetzt. Letzteres wiederum erfährt einen Austausch durch aus der Rücklaufleitung vom Verbraucher her nachströmendes kühleres Rücklaufwasser, welches in den Vorwärmbereich gelangt. Das in den Bereitschaftsbereich aufsteigende Vorwärmwasser wird vor seiner Entnahme im Bereitschaftsbereich auf Solltemperatur erwärmt.

Für die Temperaturüberwachung der Wasser-Solltemperatur ist ein Temperaturfühler im Bereitschaftsbereich vorgesehen. Sinkt die tatsächliche Temperatur aufgrund von Entnahmen oder Auskühlung unter einen vorgebbaren Grenzwert, so wird das Wasser im Bereitschaftsbereich wieder auf Solltemperatur erwärmt. Damit steht dieses Bereitschaftsvolumen für die Wärmeversorgung und die Komfortansprüche des Verbrauchers zur Verfügung.

Wechselnde Wetterverhältnisse sowie die Einflüsse des sich aus dem Tages- und Jahresgang ergebenden Sonnenstandes bewirken, dass der Solarenergieeintrag variiert. Für eine hohe Effizienz des solaren Anlagenteils ist es zudem wichtig, dass der Speicherbereich um den mit Solarwärme gespeisten Wärmetauascher möglichst kühl bleibt. Bei ausreichendem Angebot an Solarenergie kann der zweite Wärmeerzeuger, beispielsweise ein solarthermischer Röhren- oder Flachkollektor, mindestens einen Großteil der Wassererwärmung übernehmen und auch den Bereitschaftsbereich bis auf Solltemperatur erwärmen. Daneben gibt es Zeiten, in denen der Solarkollektor aufgrund von ausbleibender Solarstrahlung keine oder nur wenig Wärme erzeugt. Neben der Einspeisung solar erzeugter Wärme in den Warmwasserspeicher können natürlich auch andere regenerative Energien, insbesondere Biomasse, zum Einsatz kommen.

Aus der DE 10 2009 004 294 A1 ist ein Verfahren zum Aufladen eines einen Bereitschaftsbereich und einen Vorwärmbereich umfassenden Warmwasserspeichers mit warmem Wasser bekannt. Der Bereitschaftsbereich wird in der Regel von einem ersten Wärmeerzeuger höher temperiert, und der Vorwärmbereich in der Regel von einem zweiten Wärmeerzeuger mit fluktuierendem Wärmeangebot niedriger temperiert. In Zeiten eines ausbleibenden oder für eine Einspeisung in den Warmwasserspeicher zu geringen Wärmeangebots seitens des zweiten Wärmeerzeugers wird in einen Komfort-Betriebsmodus umgeschaltet, bei dem der Bereitschafts- und der Vorwärmbereich vom ersten Wärmeerzeuger als Komfort-Aufladung vollständig oder fast vollständig höher temperiert aufgeladen wird.

Eine Mess- und Regeleinrichtung steuert die Aufladung des Speicherbehälters anhand von Temperaturmessungen mit zwei Temperaturfühlern sowie einem Abgleich der Messwerte mit festgelegten Grenztemperaturen.

Im Normal-Betriebsmodus dient der an einer vorgebbaren Stelle S im Vorwärmbereich des Warmwasserspeichers angeordnete Temperaturfühler einer Überwachung einer Einspeisung der vom zweiten Wärmeerzeuger bereitgestellten niedrig temperierten Wärme in den Warmwasserspeicher. Ist ein vorgebbares Einschaltkriterium erfüllt, so startet die Wärmeeinspeisung, bei Erfüllung eines vorgebbaren Ausschaltkriteriums wird die Einspeisung beendet. Das Einschaltkriterium ist üblicherweise gegeben, wenn die Temperatur des Solarfluids im Solarkollektor über der entsprechenden Referenz-Wassertemperatur im Vorwärmbereich des Speicherbehälters liegt, und zwar an einer Stelle S, die für die Wärmeübergabe vom Solarfluid an das Speicherwasser von Bedeutung ist, da sie das für die Wärmeübergabe erforderliche Temperaturgefälle gegenüber der Solarfluidtemperatur beschreibt. Die Wärmeeinspeisung in den Warmwasserspeicher wird durch Umwälzen des Solarfluids gestartet. Das Ausschaltkriterium ist entsprechend gegeben, wenn die Temperatur im Solarkollektor gleich oder kleiner als die Referenztemperatur im Vorwärmbereich ist. Die Wärmeeinspeisung wird durch Beenden der Umwälzung des Solarfluids gestoppt.

Der Komfort-Aufladungsvorgang wird beispielsweise gestartet, wenn zu einem Zeitpunkt eine an einer vorgebbaren Stelle S im Vorwärmbereich gemessene Wassertemperatur T einen ersten vorgebbaren Temperatur-Grenzwert T1 unterschreitet. Nach Ablauf einer vorgebbaren Aufladungsdauer wird er wieder beendet und/oder in einen Normal-Betriebsmodus zurückgeschaltet. Er kann jedoch auch beendet werden, wenn die an der vorgebbaren Stelle S im Vorwärmbereich gemessene Wassertemperatur T einen zweiten vorgebbaren Temperatur-Grenzwert T2 überschreitet, wobei T2 größer oder gleich T1 ist. T2 kann beispielsweise die Trinkwarmwasser-Solltemperatur sein, die auch das Ausschaltkriterium für die Aufladung des Bereitschaftsbereichs darstellt. Nach Abschluss des Komfort-Aufladungsvorgangs steht im Warmwasserspeicher ein deutlich größeres Trinkwarmwasservolumen für den Verbraucher bereit.

Nachteilig hierbei ist, dass bei einer Überschneidung von einer Komfortladung und einem Vorliegen von Energie aus dem zweiten Wärmeerzeuger, diese Energie nicht genutzt werden kann. Gelöst werden soll dieses Problem durch eine Einschränkung der Zeitpunkte, zu denen eine Komfort-Aufladung durchgeführt werden soll. Dem steht entgegen, mit Hilfe von Vergangenheitsdaten die Zeitpunkte von Komfortladungsvorgängen festzulegen. Der Warmwasserverbrauch und dessen Entnahmezeitpunkt hängen stark von den Lebensumständen des Verbrauchers ab. Für eine Vielzahl an Personenhaushalten ist auch ein Warmwasserangebot zu Zeitpunkten notwendig, zu denen auch Energie des zweiten Wärmeerzeugers verfügbar wäre. Die Lösung der DE 10 2009 004 294 A1 muss somit einen Kompromiss zwischen Komfort und Energieeffizienz schließen.

Ein anderer Nachteil ergibt sich daraus, dass die maximale Wassertemperatur im Bereitschaftsbereich von einem solarbetriebenen zweiten Wärmeerzeuger überschritten werden könnte. Höhere Temperaturen sind bei einer Brauchwasserentnahme wegen Verbrühungsgefahr jedoch nicht zulässig. Der zweite Wärmeerzeuger muss dementsprechend bei einem bestimmten Grenzwert deaktiviert werden und die verfügbare Energie kann nicht genutzt werden.

Weiterhin ist nachteilig, dass der erste Wärmeerzeuger in beiden Aufwärmprogrammen bis zum Erreichen eines bestimmten Grenzwertes aktiviert und im Anschluss ausgeschaltet wird. Insbesondere bei der ausschließlichen Erwärmung des Bereitschaftsbereichs im Normal-Betrieb ist dies notwendig, um eine ausreichende Menge Warmwasser mit konstanter Temperatur bereitzuhalten. Hierdurch verursachte Startvorgänge führen jedoch zu Verschleiß an der Brennerbauteilen, erhöhen die Emissionen und sind nicht energieeffizient. Auch geht die Restwärme des ersten Wärmeerzeugers verloren.

Insbesondere bei Biomasse-Feuerungen, dort speziell bei Scheitholz-Kesselanlagen, sind Mindest-Speichervolumen für angeschlossenen Pufferspeicher vorgeschrieben. Dies ist damit begründet, dass gewisse Mindest-Brenn- bzw. Ladezeiten mit ausreichendem Pufferwasser als Wärmespeichermedium sichergestellt werden sollen. Allerdings können sich bei gewissen Auslegungssituationen relativ große Pufferspeicher-Volumina ergeben, welche dann andererseits wieder zu einer größeren Wassermenge mit entsprechender Trägheit in der Heizungsanlage führen.

Der Erfindung liegt die Aufgabe zugrunde, den Effizienzgrad einer Heizungsanlage zu verbessern, ohne dass es zu Komforteinbußen für einen Wärmeverbraucher kommt. Weiterhin sollen Verschleiß und Emissionen an Heizgeräten verhindert, sowie die weiteren Nachteile des Standes der Technik beseitigt werden.

Erfindungsgemäß wird dies mit den Merkmalen des Verfahrens gemäß Patentanspruch 1 gelöst. Vorteilhafte Weiterbildungen sind den Unteransprüchen 2 bis 13 zu entnehmen. Auch die Heizeinrichtung gemäß Patentanspruch 14 löst diese Aufgabe. Vorteilhafte Ausgestaltungen der Heizeinrichtung sind den Unteransprüchen 15 bis 20 zu entnehmen.

Die Erfindung sieht ein Verfahren zum Erwärmen eines Fluids in einem Pufferspeicher vor, der einen Bereitschaftsbereich und einen Vorwärmbereich umfasst. Der Bereitschaftsbereich wird in der Regel von einem ersten Wärmeerzeuger höher temperiert als der Vorwärmbereich. Eine Mess- und Regeleinrichtung steuert und regelt den ersten Wärmeerzeuger und wenigstens eine erste Pumpe. Der Vorwärmbereich ist in wenigstens einen ersten Vorwärmbereich und einen zweiten Vorwärmbereich unterteilt. Eine erste Grenze zwischen dem Bereitschaftsbereich und dem ersten Vorwärmbereich ist durch eine Höhe eines ersten Temperaturfühlers festgelegt und eine zweite Grenze zwischen dem ersten Vorwärmbereich und dem zweiten Vorwärmbereich ist durch eine Höhe eines zweiten Temperaturfühlers festgelegt. Die Mess- und Regeleinrichtung erfasst über den ersten Temperaturfühler eine Temperatur T1, den zweiten Temperaturfühler eine Temperatur T2 und wenigstens einem dritten Temperaturfühler eine Temperatur T3.

Der dritte Temperaturfühler ist in der Regel sehr weit unten, insbesondere im unteren Achtel der Gesamthöhe, des Pufferspeichers angeordnet. Die Temperatur des Fluids im Pufferspeicher beträgt bis über 90°C. Derartig hohe Temperaturen werden von einem solarbetriebenen zweiten Wärmeerzeuger ab einigen Tagen auch erreicht, und die Aufnahmekapazität für Solarenergie ist somit nicht begrenzt durch eine Maximaltemperatur, wie bei reinen Trinkwarmwasserspeichern.

Weiterhin haben Pufferspeicher in der Regel ein deutlich größeres Volumen als Warmwasserspeicher. Die Energie des Pufferspeichers kann sowohl für einen Heizkreislauf, als auch zur Erwärmung von Trinkwasser im Warmwasserspeicher genutzt werden. Hierzu kann der Verbraucher heißes Fluid aus dem Bereitschaftsbereich des Pufferspeichers über eine Vorlaufleitung beziehen, die Energie von diesem nutzen und es anschließend mit niedrigerer Temperatur über eine Rücklaufleitung zurück in den Vorwärmbereich des Pufferspeichers leiten. In Einfamilienhäusern werden beispielsweise Pufferspeicher mit circa 1000 l Fluidvolumen eingesetzt, wohingegen ansonsten reine Warmwasserspeicher nur etwa 150 l Volumen aufweisen.

Die Unterteilung des Vorwärmbereichs in zwei Vorwärmbereiche durch einen zusätzlichen Temperaturfühler hat den Vorteil, dass eine deutlich bessere Abstimmung der Regelung des ersten Wärmeerzeugers erfolgen kann.

Dabei wird der erste Temperaturfühler derart im oder am Pufferspeicher angeordnet, dass er auf der Grenze zwischen Bereitschaftsbereich und erstem Vorwärmbereich liegt. Somit wird auch das Volumen des Bereitschaftsbereiches festlegt. Weiterhin wird der zweite Temperaturfühler derart angeordnet, dass er zwischen dem ersten und dritten Temperaturfühler sowie auf der Grenze zwischen dem ersten und zweiten Vorwärmbereich liegt. Der zweite Temperaturfühler definiert dementsprechend das Volumen des zweiten Vorwärmebereichs. Durch eine Anpassung der Höhe der einzelnen Temperaturfühler, könnte zusätzlich eine Anpassung der Bereichsvolumina an die Verbraucher- und Erzeugerleistungen erfolgen.

Das Fluid im Bereitschaftsbereich kann mit voller Heizleistung auf konstant hoher Temperatur gehalten werden. Dadurch kann ebenfalls konstant warmes Heizwasser bereitgestellt werden. Der Verbraucher erfährt somit keine Komforteinbußen.

Das Fluid im ersten und/oder zweiten Vorwärmbereich hingegen kann langsam durch eine verringerte Heizleistung des ersten Wärmeerzeugers erwärmt werden. Die Regelung kann zudem auf den ersten Vorwärmbereich beschränkt werden, sofern der untere zweite Vorwärmbereich nicht aufgeheizt werden soll, z. B. um diesen für einen zweiten Wärmeerzeuger zu reservieren. Durch die verbesserte, bedarfsangepasstere Regelung ist es nun möglich die Anzahl der An- und Ausschaltvorgänge des ersten Wärmeerzeugers deutlich zu reduzieren. Dementsprechend steigt der Effizienzgrad bei gleichzeitig sinkendem Verschleiß und geringeren Emissionen.

Weiterhin sieht die Erfindung vor, dass für den ersten Temperaturfühler wenigstens eine erste Grenztemperatur GT1, den zweiten Temperaturfühler wenigstens eine zweite Grenztemperatur GT2 und den dritten Temperaturfühler wenigstens eine dritte Grenztemperatur GT3 vorgebbar und/oder auswählbar sind. Dies hat den entscheidenden Vorteil, dass die Mess- und Regeleinheit Kriterien für die Regelung der Wärmeerzeuger erhält.

Auch weitere vorgebbare Grenztemperaturen könnten von der Mess- und Regeleinheit zur Regelung der Heizleistung genutzt werden. In Betracht kämen z. B. unter anderem Grenzwerte für unterschiedliche Heizprogramme oder Tages- und Jahreszeiten.

Ein weiterer Vorteil ergibt sich daraus, dass die Grenztemperaturen auswählbar sind. Hierdurch kann das Verfahren individualisiert werden, indem die Höhe der Grenztemperaturen an den Einsatzzweck angepasst werden. Sowohl die Erzeugerseite in Form eines ersten und/oder zweiten Wärmeerzeugers und deren Leistungsfähigkeit, als auch die Verbrauchereigenschaften könnten Anpassungen der Grenztemperaturen zur Effizienzsteigerung erforderlich machen. In Betracht kämen z. B. Kriterien wie der Wohnraum, die Beheizungs-und Warmwassergewohnheiten oder die Leistungsfähigkeit der Wärmeerzeuger.

Eine weitere Ausgestaltung der Erfindung sieht vor, dass die Mess- und Regeleinrichtung in einem ersten Aufheizprogramm H1 die erste Pumpe aktiviert und der erste Wärmeerzeuger unter Volllast betrieben wird bis T2 ≥ GT2, wobei nach Aktivierung der ersten Pumpe das Fluid vom Pufferspeicher zum ersten Wärmeerzeuger und von diesem zurück in den Pufferspeicher befördert wird. Somit wird sowohl der Bereitschaftsbereich als auch der erste Vorwärmbereich schnellst möglich erwärmt und die Energie steht dem Verbraucher zur Verfügung. Sinnvoll sind in der Regel eine Fluidentnahme aus dem zweiten Vorwärmbereich und eine Fluideinspeisung in den Bereitschaftsbereich.

Vorteilhafterweise betreibt die Mess- und Regeleinrichtung im ersten Aufheizprogramm H1 den ersten Wärmeerzeuger in einem Teillastbereich bzw. mit verringerter Heizleistung, solange T2 ≥ GT2, aber T3 ≤ GT3 ist. Fällt die Temperatur T2 unter den Grenzwert GT2 zurück, wird das Fluid im ersten Vorwärmbereich wieder mit voller Leistung erwärmt. Dem Verbraucher steht somit immer eine ausreichende Energiemenge zur Verfügung. Der Betrieb des ersten Wärmeerzeugers im Teillastbereich verhindert ein schnelles Erwärmen des zweiten Vorwärmbereichs und ein häufiges Abschalten des ersten Wärmeerzeugers bei einem Erreichen der Grenztemperatur T3 ≥ GT3. Somit werden effektiv Energieverluste vermieden, der Verschleiß reduziert und Emissionen verringert.

Besonders vorteilhaft ist, dass die Mess- und Regeleinrichtung im ersten Aufheizprogramm H1 die dritte Temperatur T3 überwacht und die Heizleistung des ersten Wärmeerzeugers verringert, wenn die dritte Temperatur T3 stark ansteigt oder die Heizleistung erhöht, wenn die dritte Temperatur zu schwach ansteigt, insbesondere auch wenn sie stagniert oder abfällt. Zur Überwachung der Temperaturen können Floating Point Units (FTU) eingesetzt werden. Durch diese aktive Regelung ist es möglich die Einschaltzeit des ersten Wärmeerzeugers weiter zu verlängern. Marktübliche Wärmeerzeuger können heute problemlos mit Heizleistungen von 50% bis 100% betrieben werden, bei gleichzeitig sehr hohem Effizienzniveau. Neuartige Wärmeerzeuger ermöglichen sogar einen Modulationsbereich der Heizleistung von 10% bis 100%. Der erste Wärmeerzeuger, der Pufferspeicher und die Wärmeverbraucher sollten so aufeinander abgestimmt dass, dass der erste Wärmeerzeuger den Pufferspeicher bei üblichem Energieverbrauch noch erwärmen kann. Der erste Wärmeerzeuger sollte jedoch nicht so groß gewählt werden, dass er häufig abgeschaltet werden muss, da seine minimale Heizleistung zu hoch ist.

Sofern ein Abschaltvorgang des ersten Wärmeerzeugers erforderlich ist, ist es von Vorteil, dass die Mess- und Regeleinrichtung im ersten Aufheizprogramm H1 bei Erreichen und/oder Überschreiten der dritten Grenztemperatur GT3 den ersten Wärmeerzeuger 20 deaktiviert, wobei jedoch die erste Pumpe solange aktiviert bleibt, bis sie entweder zeitgesteuert, oder wenn an einem Vorlauftemperaturfühler eine Vorlauftemperatur VT ≤ T3 erreicht ist, deaktiviert wird. Auf diese Weise kann die bereits produzierte Energie aus dem ersten Wärmeerzeuger noch in den Pufferspeicher geleitet werden. Ohne einen derartigen Nachlauf gibt der erste Wärmeerzeuger diese Energie an die Umgebung ab. Eine Zeitsteuerung des Nachlaufs ist zwar einfacher zu realisieren, aber es kommt immer noch zu geringen Energieverlusten. Optimal gelöst wird dies mit der Messung der Vorlauftemperatur und einem Abgleich mit der Temperatur T3. Sobald die Vorlauftemperatur niedriger ist als T3, wird die Pumpe deaktiviert. Es wäre jedoch auch möglich eine Entnahmetemperatur zu messen und den Nachlauf anzuhalten, wenn die Vorlauftemperatur kleiner als die Entnahmetemperatur ist.

Ein wesentlicher Vorteil der Erfindung ergibt sich durch die Verwendung eines zweiten Wärmeerzeugers. Dieser zeichnet sich in der Regel durch unregelmäßige Energieabgabemengen aus. Insbesondere handelt es sich üblicherweise um solarthermische Röhren-oder Flachkollektoren.

Die Mess- und Regeleinrichtung aktiviert in einem zweiten Aufheizprogramm H2 den zweiten Wärmeerzeuger mit voller Heizleistung und eine zweite Pumpe. Die verfügbare Energie des zweiten Wärmeerzeugers wird so immer in den Pufferspeicher eingeleitet. Der Pufferspeicher ist derart ausgelegt, dass die maximal zulässige Fluidtemperatur in ihm höher ist, als die maximal erreichbare Temperatur des zweiten Wärmeerzeugers. Dementsprechend ist zu keinem Zeitpunkt eine Deaktivierung des zweiten Wärmeerzeugers notwendig und verfügbare Energie des zweiten Wärmeerzeugers geht nicht verloren. In Kombination mit einem solarbetriebenen zweiten Wärmeerzeuger liegt die maximal zulässige Fluidtemperatur im Pufferspeicher vorzugsweise bei etwa 90°C.

Aufgabe des ersten Wärmeerzeugers im zweiten Aufwärmprogramm ist es, trotz der schwankenden Leistung des zweiten Wärmeerzeugers genügend aufgeheiztes Fluid im Bereitschaftsbereich bereit zu halten. Vorteilhafterweise aktiviert die Mess- und Regeleinrichtung im zweiten Aufheizprogramm H2 den ersten Wärmeerzeuger mit voller Heizleistung bis T1 ≥ GT1 und die erste Pumpe, wodurch Fluid vom Pufferspeicher zum ersten Wärmeerzeuger und von diesem zurück in den Pufferspeicher gefördert wird.

Solange T1 ≥ GT1, aber T2 ≤ GT2 ist wird der erste Wärmeerzeuger in einem Teillastbereich mit verringerter Heizleistung betrieben. Dabei überwacht die Mess- und Regeleinrichtung die zweite Temperatur T2 und verringert die Heizleistung des ersten Wärmeerzeugers, wenn die zweite Temperatur T2 stark ansteigt oder erhöht die Heizleistung, wenn sie zu schwach ansteigt, insbesondere auch wenn sie stagniert oder abfällt. Dies hat den Vorteil, dass der erste Wärmeerzeuger nicht regelmäßig abgeschaltet werden muss, aber dennoch eine ausreichende Menge an verfügbarer Energie im Bereitschaftsbereich vorhanden ist, um beispielsweise einen Warmwasserspeicher zu erwärmen oder eine Heizung zu betreiben.

Ist trotz der Anpassung der Heizleistung eine Abschaltung des ersten Wärmeerzeugers notwendig, weil die zweite Grenztemperatur GT2 erreicht oder überschritten wird, ist von Vorteil, dass die Mess- und Regeleinrichtung den ersten Wärmeerzeuger deaktiviert, wobei aber die erste Pumpe solange aktiviert bleibt, bis sie entweder zeitgesteuert, oder wenn an einem Vorlauftemperaturfühler eine Vorlauftemperatur VT ≤ T2 erreicht ist, deaktiviert wird. Hierdurch wird die bereits entstandene Restwärme aus dem Wärmeerzeuger in den Pufferspeicher geleitet, die ansonsten an die Umgebung abgegeben würde. Der zweite Vorwärmbereich bleibt auf diese Weise dem zweiten Wärmeerzeuger vorbehalten. Es ist jedoch auch möglich, die erste Pumpe erst dann zu deaktivieren, wenn VT ≤ T3 ist.

Eine besonders vorteilhafte Ausgestaltung der Erfindung sieht vor, dass die Mess- und Regeleinrichtung zunächst überprüft, ob ein zweiter Wärmeerzeuger eine ausreichende Heizleistung erbringen kann, insbesondere indem abgeglichen wird, ob ein Sensorsignal eines Sensors einen bestimmten Grenzwert überschreitet oder der zweite Wärmeerzeuger ein positives Bestätigungssignal sendet und/oder auf Basis zurückliegender Daten die Prognose erstellt werden kann, dass eine ausreichende Heizleistung zu erwarten ist. Gleichzeitig ermittelt die Mess- und Regeleinrichtung auf Basis der erfassten Temperaturen T1, T2 und T3 einen Heizbedarf durch einen Abgleich mit den Grenztemperaturen GT1, GT2 und GT3. Anschließend wählt sie bei einem Vorliegen eines Heizbedarfs ein erstes Aufheizprogramm H1, wenn keine ausreichende Heizleistung des zweiten Wärmeerzeugers vorliegt, oder ein zweites Aufheizprogramm H2, wenn eine ausreichende Heizleistung des zweiten Wärmeerzeugers vorliegt.

Es ist auch möglich, dass der zweite Wärmeerzeuger eine eigene zweite Mess- und Regeleinrichtung aufweist, die feststellt, ob eine ausreichende Heizleistung vorliegt und die zweite Pumpe ansteuert. Eine derartige zweite Mess- und Regeleinrichtung müsste jedoch mit der Mess- und Regeleinrichtung verbunden werden, um die Heizleistungen des ersten und zweiten Wärmeerzeugers aufeinander abzustimmen.

Um die Effizienz der Aufheizprogramme weiter zu steigern, ist es von Vorteil, dass die Mess- und Regeleinrichtung eine aktuelle Rücklauftemperatur RT und/oder Kalenderdaten und/oder Wetterdaten auswertet und zur Auslegung der Aufheizprogramme H1 und H2 verwendet. Diese werden insbesondere so ausgelegt werden, dass sie möglichst wenig Deaktivierungen des ersten Wärmeerzeugers und möglichst lange Aktivierungszeiten des zweiten Wärmeerzeugers aufweisen. Insbesondere soll die Energienutzung des zweiten Wärmeerzeugers maximiert werden ohne, dass der Komfort für den Verbraucher sinkt. Die Rücklauftemperatur wird hierbei von einem Rücklauftemperaturfühler erfasst, der hinter dem Energieverbraucher angeordnet ist. Weiterhin könnten insbesondere die Wetterdaten ständig durch moderne Kommunikationsmittel verfügbar gemacht werden. Hierdurch kann der erste Wärmeerzeuger mit maximalen Aktivierungszeiten betrieben werden. Zusätzlich kann eine maximale Ausnutzung der Energie des zweiten Wärmeerzeugers sichergestellt werden und trotzdem wird dem Komfortanspruch des Verbrauchers entsprochen.

Weiterhin wertet die Mess- und Regeleinrichtung vorteilhafterweise auch die Heizleistungsdaten des ersten und zweiten Wärmeerzeugers aus und nutzt die Vergangenheitsdaten zur Auslegung der Aufheizprogramme H1 und H2, die insbesondere so ausgelegt werden, dass sie möglichst wenig Deaktivierungen des ersten Wärmeerzeugers und möglichst lange Aktivierungszeiten des zweiten Wärmeerzeugers aufweisen. Auf diese Weise können die Aufheizprogramme an Tages- und Jahreszeit bedingten Schwankungen des Heizleistungsbedarfs angepasst werden.

Auf Basis dieser zurückliegenden Daten kann die Mess- und Regeleinrichtung bereits frühzeitig zwischen dem ersten und dem zweiten Aufheizprogramm wechseln. Hierdurch ist es beispielsweise möglich, das erste Aufheizprogramm zu deaktivieren, obwohl noch keine ausreichende Heizleistung des zweiten Wärmeerzeugers vorliegt, wodurch zunächst der zweiten Vorwärmbereich abkühlt, um im Anschluss mit der erwarteten Heizleistung des zweiten Wärmeerzeugers wieder erwärmt zu werden.

Eine weitere vorteilhafte Ausgestaltung der Erfindung sieht vor, dass ein zweites Ventil die Auswahl zwischen einer ersten und einer zweiten Entnahmestelle ermöglicht. Die Entnahmestellen sind in unterschiedlicher Höhe des Pufferspeichers angeordnet und die Auswahl erfolgt durch die Mess- und Regeleinrichtung. Durch den Wechsel zwischen den Entnahmestellen ist es möglich, Fluid unterschiedlicher Temperatur zum ersten Wärmeerzeuger zu führen. Eine derartige Wasserentnahme kann aber auch sinnvoll sein, um den zweiten Vorwärmbereich vom Fluidkreislauf des ersten Wärmeerzeugers auszunehmen und auskühlen zu lassen, um anschließend die Heizleistung des zweiten Wärmeerzeugers besser ausnutzen zu können. Gleichzeitig kann bei einem außerordentlich hohen Energieverbrauch, der größer ist als die Heizleistung des ersten Wärmeerzeugers, der Bereitschaftsbereich noch auf konstanter Temperatur gehalten werden, bis die Vorwärmbereiche weitestgehend abgekühlt sind.

Es ist auch möglich, die Anzahl der Entnahmestellen weiter zu erhöhen und das Ventil dieser Anzahl anzupassen. Dadurch, dass ein erstes Ventil das Fluid bei einer Vorlauftemperatur VT ≤ T3 durch einen Bypass zurück zum ersten Wärmeerzeuger leitet und bei VT ≥ T3 das Fluid in den Pufferspeicher leitet, kann die Effizienz der Erfindung weiter gesteigert werden. Fluid, das während einer Deaktivierungsphase in den Leitungen und dem ersten Wärmeerzeuger abgekühlt ist, wird so nicht direkt in den Pufferspeicher eingeleitet. Erst wenn die Temperatur des aus dem ersten Wärmeerzeuger kommenden Fluids hoch genug ist, wird das Ventil umgeschaltet und das Fluid strömt in den Pufferspeicher.

Die erfindungsgemäße Heizeinrichtung besteht aus einem Pufferspeicher mit einer thermischen Isolation sowie einem ersten Wärmeerzeuger, dessen Heizleistung veränderbar ist und einer ersten Pumpe, die mit einer Mess- und Regeleinrichtung verbunden sind. Erfindungsgemäß sind wenigstens ein erster, zweiter und dritter Temperaturfühler im und/oder am Pufferspeicher in unterschiedlicher Höhe positioniert und ebenfalls mit der Mess- und Regeleinrichtung verbunden.

Die Energie des Pufferspeichers wiederum kann sowohl für einen Heizkreislauf, als auch zur Erwärmung von Trinkwarmwasser genutzt werden. Hierzu kann der Verbraucher heißes Wasser aus dem Bereitschaftsbereich des Pufferspeichers beziehen, die Energie von diesem nutzen und es anschließend mit niedrigerer Temperatur zurück in den Vorwärmbereich des Pufferspeichers leiten.

Die Unterteilung des Vorwärmbereichs in zwei Vorwärmbereiche durch einen zusätzlichen Temperaturfühler hat den Vorteil, dass eine deutlich bessere Abstimmung der Regelung des ersten Wärmeerzeugers erfolgen kann. Das Fluid im Bereitschaftsbereich kann mit voller Heizleistung auf konstant hoher Temperatur gehalten werden. Dadurch kann ebenfalls konstant warmes Heiz- und Brauchwasser bereitgestellt werden. Der Verbraucher erfährt somit keine Komforteinbußen.

Das Fluid im ersten und/oder zweiten Vorwärmbereich hingegen kann langsam durch eine verringerte Heizleistung des ersten Wärmeerzeugers erwärmt werden. Die Regelung kann zudem auf den ersten Vorwärmbereich beschränkt werden, sofern der untere zweite Vorwärmbereich nicht aufgeheizt werden soll, z. B. um diesen für einen zweiten Wärmeerzeuger zu reservieren. Durch die verbesserte Regelung ist es nun möglich die Anzahl der An-und Ausschaltvorgänge des ersten Wärmeerzeugers deutlich zu reduzieren. Dementsprechend steigt der Effizienzgrad und Verschleiß und Emissionen sinken.

Vorteilhafterweise ist die Mess- und Regeleinrichtung mit einem Vorlauftemperaturfühler verbunden, der an einer von dem ersten Wärmeerzeuger abgehenden Leitung angeordnet ist. Mit Hilfe der Vorlauftemperatur VT kann die Mess- und Regeleinrichtung darüber entscheiden, ob das Fluid in den Pufferspeicher eingeleitet wird. Es ist somit möglich, bei einer Deaktivierung des ersten Wärmeerzeugers die erste Pumpe erst dann zu deaktivieren, wenn das Fluid nicht mehr ausreichend durch Restenergie im ersten Wärmeerzeuger erwärmt wird. Diese Restenergie kann somit effektiv genutzt werden und die Effizienz der Heizeinrichtung steigt.

Bei dem ersten Wärmeerzeuger sollte es sich um eine Heizung für fossile Energieträger und/oder eine Wärmepumpe handeln. Dies ermöglicht regelbare Heizleistungen, inklusive Deaktivierungsphasen, sowie eine kontinuierliche Verfügbarkeit. Andere Wärmeerzeuger, die diese Eigenschaften aufweisen, kommen als erster Wärmeerzeuger ebenfalls in Betracht.

In einer geeigneten Ausführung ist die Mess- und Regeleinrichtung mit wenigstens einem ersten Ventil verbunden. Dieses sitzt zwischen dem Vorlauftemperaturfühler und dem Pufferspeicher und ist mit der Mess- und Regeleinrichtung verbunden. Je nach Schaltstellung leitet das Ventil das aus dem ersten Wärmeerzeuger kommende Fluid in den Pufferspeicher, oder aber durch einen Bypass zurück zum ersten Wärmeerzeuger. Durch diese Anordnung kann verhindert werden, dass nach einer Deaktivierungsphase des ersten Wärmeerzeugers, abgekühltes Fluid aus diesem oder den Leitungen in den Pufferspeicher eingeleitet wird. Hierdurch erhöht sich die Effizienz der Heizeinrichtung.

Besondere Vorteile der Erfindung ergeben sich, wenn wenigstens ein zweiter Wärmeerzeuger vorhanden ist, der ebenfalls mit der Mess- und Regeleinrichtung verbunden ist. Dieser wird insbesondere mit Solarenergie oder mit anderen regenerativen Ressourcen betrieben. Die diskontinuierliche Leistungsfähigkeit eines solchen zweiten Wärmeerzeugers wird durch den ersten Wärmeerzeuger ergänzt. Die Mess- und Regeleinrichtung steuert die Heizeinrichtung derart, dass ein möglichst hoher Anteil Energie vom zweiten Wärmeerzeuger erzeugt wird, ohne dass es zu Komforteinbußen für den Verbraucher kommt. Dadurch, dass auch die Ein- und Ausschaltvorgänge des ersten Wärmeerzeugers minimiert werden, werden zudem die Effizienz gesteigert, Verschleiß reduziert und Emissionen verringert.

Zum Transfer der Energie hat der zweite Wärmeerzeuger einen Fluidkreislauf, bestehend aus einer zweite Pumpe und einem Wärmetauscher, der insbesondere im Pufferspeicher liegt. Vom zweiten Wärmeerzeuger erwärmtes Fluid wird zum Wärmetauscher gepumpt und überträgt Wärmeenergie an das Fluid im Pufferspeicher.

Weitere Vorteile können sich dadurch ergeben, dass die Mess- und Regeleinrichtung mit weiteren Temperaturfühlern verbunden ist. Insbesondere ein Rücklauftemperaturfühler, der zwischen Wärmeverbraucher und Pufferspeicher angeordnet ist, kann der Mess- und Regeleinrichtung wichtige Informationen über den aktuellen Energieverbrauch liefern. Diese kann entsprechend die Heizleistung des ersten Wärmeerzeugers bei einem steigenden Energieverbrauch anheben und bei einem sinkenden Energieverbrauch reduzieren. Auch eine Erhöhung der Temperaturfühleranzahl im oder am Pufferspeicher kann zu einer noch effizienteren Ausnutzung der Heizleistungen führen.

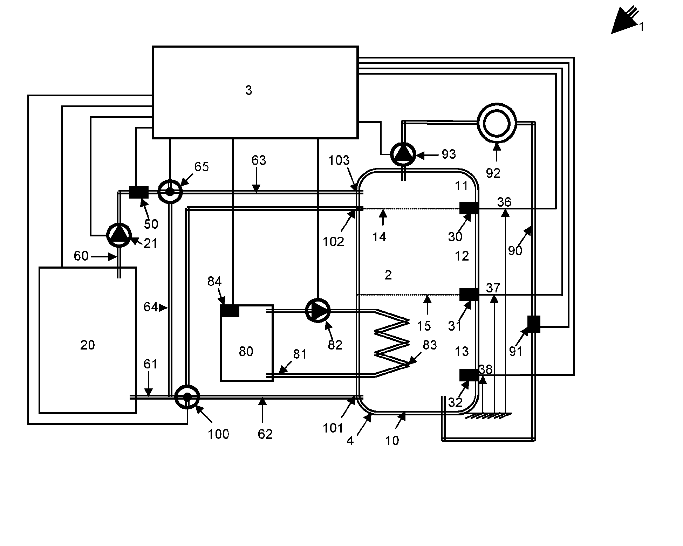

Anhand der Zeichnung wird ein Ausführungsbeispiel der Erfindung erläutert. Diese zeigt in einer einzigen Figur eine Heizeinrichtung mit einem Pufferspeicher sowie einem ersten und zweiten Wärmeerzeuger.

Die Figur zeigt eine erfindungsgemäße Heizeinrichtung 1 mit einem Fluid 2 gefüllten Pufferspeicher 10 mit einer Isolation 4, der einen Bereitschaftsbereich 11 und einen Vorwärmbereich aufweist. Der Vorwärmbereich ist in einen ersten 12 und einen zweiten Vorwärmbereich 13 unterteilt. Eine erste Grenze 14 zwischen dem Bereitschaftsbereich 11 und dem ersten Vorwärmbereich 12 ist durch eine Höhe 36 eines ersten Temperaturfühlers 30 festgelegt und eine zweite Grenze 15 zwischen dem ersten Vorwärmbereich 12 und dem zweiten Vorwärmbereich 13 ist durch eine Höhe 37 eines zweiten Temperaturfühlers 31 festgelegt. Ein dritter Temperaturfühler 32 sitzt in Höhe 38. Die Temperaturfühler 30, 31 und 32 sind mit einer Mess- und Regeleinrichtung 3 verbunden.

Ein erster Wärmeerzeuger 20 ist derart mit dem Pufferspeicher verbunden, dass ein erstes Ende einer Leitung 62 an einer ersten Entnahmestelle 101 im unteren Bereich des Pufferspeichers 10 angeschlossen ist, und am zweiten Ende der Leitung 62 ein zweites Ventil 100 sitzt, das mit einer Leitung 61 mit dem ersten Wärmeerzeuger 20 verbunden ist. In einer anderen Schaltstellung des zweiten Ventils 100, ist der erste Wärmeerzeuger mit einer zweiten Entnahmestelle 102 verbunden. Eine Leitung 60 verbindet den ersten Wärmeerzeuger 20 auf der abgehenden Seite mit einer ersten Pumpe 21, hinter der ein Vorlauftemperaturfühler 50 sitzt. Hinter dem Vorlauftemperaturfühler 50 sitzt wiederum ein erstes Ventil 65. Die Mess- und Regeleinrichtung 3 ist mit dem ersten 65 und zweiten Ventil 100, dem ersten Wärmeerzeuger 20, der ersten Pumpe 21 sowie dem Vorlauftemperaturfühler 50 verbunden. Entsprechend der Ventilstellung des ersten Ventils 65 bildet Leitung 60 mit einem Bypass 64 und Leitung 61 einen kleinen Zirkulationskreislauf, oder Leitung 60 verbindet zusammen mit Leitung 63 den ersten Wärmeerzeuger 20 mit einer Einfüllstelle 103, die in den Bereitschaftsbereich 11 des Pufferspeichers 10 mündet.

Die Figur zeigt weiterhin einen zweiten Wärmeerzeuger 80 mit einem Sensor 84. Ein Fluidkreislauf 81 ist an den zweiten Wärmeerzeugers 80 angeschlossen und besteht aus Leitungen, einer zweiten Pumpe 82, sowie einem Wärmetauscher 83, der im zweiten Vorwärmbereich 13 liegt. Sensor 84 und Pumpe 82 sind mit der Mess- und Regeleinrichtung 3 verbunden.

Die Heizeinrichtung 1 enthält ferner einen Heizkreislauf 90. Eine dritte Pumpe 93 fördert Fluid 2 aus dem Bereitschaftsbereich 11 zu einem Wärmeverbraucher 92. Der Wärmeverbraucher ist auf der abgehenden Seite mit dem zweiten Vorwärmbereich 13 verbunden, wobei zwischen diesen noch ein Rücklauftemperaturfühler 91 angeordnet ist. Sowohl Rücklauftemperaturfühler 91 als auch dritte Pumpe 93 sind mit der Mess- und Regeleinrichtung 3 verbunden.

In einem ersten Aufheizprogramm H1 aktiviert die Mess- und Regeleinrichtung 3 die erste Pumpe 21 und der erste Wärmeerzeuger wird unter Volllast betrieben bis T2 größer oder gleich einer festlegbaren Grenztemperatur GT2 ist. Nach Aktivierung der ersten Pumpe 21 wird Fluid solange über die Leitungen 60, 61 und eine Bypass 64 im Kreis gefördert, bis eine Vorlauftemperatur VT erreicht ist, bei der die Mess- und Regeleinrichtung 3 das erste Ventil 65 umschaltet, insbesondere wenn VT ≥ T3. Erst nach Umschaltung wird das Fluid 2 vom Pufferspeicher 10 zum ersten Wärmeerzeuger 20 und von diesem zurück in den Pufferspeicher 10 befördert. Sobald der Bereitschafts- 11 und der erste Vorwärmbereich 12 erwärmt sind, verringert die Mess- und Regeleinrichtung 3 die Heizleistung des ersten Wärmeerzeugers 20, solange T2 ≥ GT2, aber T3 ≤ GT3 ist. Dabei wird die dritte Temperatur T3 überwacht und die Heizleistung verringert, wenn die dritte Temperatur T3 stark ansteigt oder die Heizleistung erhöht, wenn die dritte Temperatur T3 zu schwach ansteigt, insbesondere auch wenn sie stagniert oder abfällt. Erreicht die Temperatur T3 eine Grenztemperatur GT3, deaktiviert die Mess- und Regeleinrichtung 3 den ersten Wärmeerzeuger 20, wobei die erste Pumpe 21 solange aktiviert bleibt, bis an dem Vorlauftemperaturfühler 50 eine Vorlauftemperatur VT ≤ T3 erreicht ist.

In einem zweiten Aufwärmprogramm H2 aktiviert die Mess- und Regeleinrichtung 3 den zweiten Wärmeerzeuger 80 mit voller Heizleistung und die zweite Pumpe 82. Zusätzlich aktiviert die Mess- und Regeleinrichtung 3 den ersten Wärmeerzeuger 80 mit voller Heizleistung und die erste Pumpe 21. Nach Aktivierung der ersten Pumpe 21 wird Fluid solange über die Leitungen 60, 61 und eine Bypass 64 im Kreis gefördert, bis eine Vorlauftemperatur VT erreicht ist, bei der die Mess- und Regeleinrichtung 3 das erste Ventil 65 umschaltet. Erst nach Umschaltung wird das Fluid 2 vom Pufferspeicher 10 zum ersten Wärmeerzeuger 20 und von diesem zurück in den Pufferspeicher 10 befördert.

Der erste Wärmeerzeuger 20 wird mit Volllast betrieben bis die Temperatur T1 größer als eine Grenztemperatur GT1 ist. Anschließend wird die zweite Temperatur T2 überwacht und die Heizleistung des ersten Wärmeerzeugers 20 verringert, wenn diese stark ansteigt oder die Heizleistung erhöht, wenn diese zu schwach ansteigt, insbesondere auch wenn sie stagniert oder abfällt. Bei Erreichen und/oder Überschreiten der zweiten Grenztemperatur GT2 wird der erste Wärmeerzeuger 20 deaktiviert, wobei die erste Pumpe 21 solange aktiviert bleibt, bis am Vorlauftemperaturfühler 50 eine Vorlauftemperatur VT ≤ T2 erreicht ist.

Zur Auswahl eines Heizprogramms überprüft die Mess- und Regeleinrichtung 3, ob der zweite Wärmeerzeuger eine ausreichende Heizleistung erbringen kann, insbesondere indem abgeglichen wird, ob das Sensorsignal des Sensors 84 einen bestimmten Grenzwert überschreitet oder der zweite Wärmeerzeuger 80 ein positives Bestätigungssignal sendet. Ergänzend kann auf Basis zurückliegender Daten eine Prognose erstellt werden, ob eine ausreichende Heizleistung zu erwarten ist. Weiterhin wird auf Basis der erfassten Temperaturen (T1, T2, T3) ein Heizbedarf durch einen Abgleich mit den Grenztemperaturen GT1, GT2 und GT3 ermittelt. Liegt ein Heizbedarf vor, wählt die Mess- und Regeleinrichtung ein erstes Aufheizprogramm, wenn keine ausreichende Heizleistung des zweiten Wärmeerzeugers 80 vorliegt oder ein zweites Aufheizprogramm, wenn eine ausreichende Heizleistung des zweiten Wärmeerzeugers 80 vorliegt.

Zur Verbesserung der Effizienz und zur Vermeidung von Ein- und Ausschaltvorgängen des ersten Wärmeerzeugers 20 wertet die Mess- und Regeleinrichtung 3 die Heizleistungsdaten des ersten 20 und zweiten Wärmeerzeugers 80, sowie eine aktuelle Rücklauftemperatur RT und Kalenderdaten und Wetterdaten aus. Daraufhin erfolgt eine Auslegung der Aufheizprogramme H1 und H2, die insbesondere so ausgelegt werden, dass sie möglichst wenig Deaktivierungen des ersten Wärmeerzeugers 20 und möglichst lange Aktivierungszeiten des zweiten Wärmeerzeugers 80 aufweisen.

Im zweiten Aufwärmprogramm wird das Fluid für den ersten Wärmeerzeuger 20 aus der zweiten Entnahmestelle 102 entnommen, damit Fluid im zweiten Aufwärmbereich 13 ausschließlich durch den zweiten Wärmeerzeuger 80 erwärmt wird.

## Patentansprüche

1. Verfahren zum Erwärmen eines Fluids (2) in einem Pufferspeicher (10), der einen Bereitschaftsbereich (11) und einen Vorwärmbereich umfasst, wobei der Bereitschaftsbereich (11) in der Regel von einem ersten Wärmeerzeuger (20) höher temperiert wird als der Vorwärmbereich, wobei eine Mess- und Regeleinrichtung (3) den ersten Wärmeerzeuger (20) und wenigstens eine erste Pumpe (21) ansteuert und regelt,
**dadurch gekennzeichnet, dass**
- der Vorwärmbereich in wenigstens einen ersten Vorwärmbereich (12) und einen zweiten Vorwärmbereich (13) unterteilt ist,
- eine erste Grenze (14) zwischen dem Bereitschaftsbereich (11) und dem ersten Vorwärmbereich (12) durch eine Höhe (36) eines ersten Temperaturfühlers (30) festgelegt ist,
- eine zweite Grenze (15) zwischen dem ersten Vorwärmbereich (12) und dem zweiten Vorwärmbereich (13) durch eine Höhe (37) eines zweiten Temperaturfühlers (31) festgelegt ist,
- die Mess- und Regeleinrichtung (3) über den ersten Temperaturfühler (30) eine Temperatur (T1), den zweiten Temperaturfühler (31) eine Temperatur (T2) und wenigstens einem dritten Temperaturfühler (32) eine Temperatur (T3) erfasst.

2. Verfahren nach Anspruch 1,
**dadurch gekennzeichnet, dass** für den ersten Temperaturfühler (30) wenigstens eine erste Grenztemperatur (GT1), den zweiten Temperaturfühler (31) wenigstens eine zweite Grenztemperatur (GT2), und den dritten Temperaturfühler (32) wenigstens eine dritte Grenztemperatur (GT3), vorgebbar und/oder auswählbar sind.

3. Verfahren nach Anspruch 2,
**dadurch gekennzeichnet, dass** die Mess- und Regeleinrichtung (3) in einem ersten Aufheizprogramm (H1) die erste Pumpe (21) aktiviert und der erste Wärmeerzeuger (20) unter Volllast betrieben wird bis T2 ≥ GT2 ist.

4. Verfahren nach einem der Ansprüche 2 oder 3,
**dadurch gekennzeichnet, dass** die Mess- und Regeleinrichtung (3) im ersten Aufheizprogramm (H1) den ersten Wärmeerzeuger (20) in einem Teillastbereich bzw. mit verringerter Heizleistung betreibt, solange T2 ≥ GT2, aber T3 ≤ GT3 ist.

5. Verfahren nach Anspruch 4,
**dadurch gekennzeichnet, dass** die Mess- und Regeleinrichtung (3) im ersten Aufheizprogramm (H1) die dritte Temperatur (T3) überwacht und die Heizleistung des ersten Wärmeerzeugers (20) verringert, wenn die dritte Temperatur (T3) stark ansteigt oder die Heizleistung erhöht, wenn die dritte Temperatur (T3) zu schwach ansteigt, insbesondere auch wenn sie stagniert oder abfällt.

6. Verfahren nach einem der Ansprüche 3 bis 6,
**dadurch gekennzeichnet, dass** die Mess- und Regeleinrichtung (3) im ersten Aufheizprogramm (H1) bei Erreichen und/oder Überschreiten der dritten Grenztemperatur (GT3) den ersten Wärmeerzeuger (20) deaktiviert, wobei die erste Pumpe (21) solange aktiviert bleibt, bis sie entweder zeitgesteuert, oder wenn an einem Vorlauftemperaturfühler (50) eine Vorlauftemperatur VT ≤ T3 erreicht ist, deaktiviert wird.

7. Verfahren nach einem der Ansprüche 2 bis 6,
**dadurch gekennzeichnet, dass** die Mess- und Regeleinrichtung (3) in einem zweiten Aufheizprogramm (H2) einen zweiten Wärmeerzeuger (80) mit voller Heizleistung und eine zweite Pumpe (82) aktiviert.

8. Verfahren nach einem der Ansprüche 2 bis 7,
**dadurch gekennzeichnet, dass** die Mess- und Regeleinrichtung (3) im zweiten Aufheizprogramm (H2) die erste Pumpe (21) aktiviert und der erste Wärmeerzeuger (20) unter Volllast betrieben wird bis T1 ≥ GT1 ist, sowie den ersten Wärmeerzeuger (20) in einem Teillastbereich bzw. mit verringerter Heizleistung betreibt, solange T1 ≥ GT1, aber T2 ≤ GT2 ist, wobei die Heizleistung des ersten Wärmeerzeugers (20) verringert wird, wenn die zweite Temperatur (T2) stark ansteigt oder die Heizleistung erhöht wird, wenn die zweite Temperatur (T2) zu schwach ansteigt, insbesondere auch wenn sie stagniert oder abfällt, und bei Erreichen und/oder Überschreiten der zweiten Grenztemperatur (GT2) den ersten Wärmeerzeuger (20) deaktiviert, wobei die erste Pumpe (21) solange aktiviert bleibt, bis sie entweder zeitgesteuert, oder wenn an einem Vorlauftemperaturfühler (50) eine Vorlauftemperatur VT ≤ T2 erreicht ist, deaktiviert wird.

9. Verfahren nach einem der Ansprüche 2 bis 8,
**dadurch gekennzeichnet, dass** die Mess- und Regeleinrichtung (3) überprüft, ob ein zweiter Wärmeerzeuger (80) eine ausreichende Heizleistung erbringen kann, insbesondere indem abgeglichen wird, ob ein Sensorsignal eines Sensors (84) einen bestimmten Grenzwert überschreitet oder der zweite Wärmeerzeuger (80) ein positives Bestätigungssignal sendet, und/oder auf Basis zurückliegender Daten die Prognose erstellt werden kann, dass eine ausreichende Heizleistung zu erwarten ist, und auf Basis der erfassten Temperaturen (T1, T2, T3) einen Heizbedarf durch einen Abgleich mit den Grenztemperaturen (GT1, GT2, GT3) ermittelt, und bei einem Vorliegen eines Heizbedarfs ein erstes Aufheizprogramm (H1) wählt, wenn keine ausreichende Heizleistung des zweiten Wärmeerzeugers (80) vorliegt, oder ein zweites Aufheizprogramm (H2) wählt, wenn eine ausreichende Heizleistung des zweiten Wärmeerzeugers (80) vorliegt.

10. Verfahren nach einem der vorhergehenden Ansprüche,
**dadurch gekennzeichnet, dass** die Mess- und Regeleinrichtung (3) eine aktuelle Rücklauftemperatur (RT) und/oder Kalenderdaten und/oder Wetterdaten auswertet und zur Auslegung der Aufheizprogramme (H 1, H2) verwendet, die insbesondere so ausgelegt werden, dass sie möglichst wenig Deaktivierungen des ersten Wärmeerzeugers (20) und möglichst lange Aktivierungszeiten des zweiten Wärmeerzeugers (80) aufweisen.

11. Verfahren nach einem der vorhergehenden Ansprüche,
**dadurch gekennzeichnet, dass** die Mess- und Regeleinrichtung (3) Heizleistungsdaten des ersten und zweiten Wärmeerzeugers (20,80) auswertet und zur Auslegung der Aufheizprogramme (H1, H2) verwendet, die insbesondere so ausgelegt werden, dass sie möglichst wenig Deaktivierungen des ersten Wärmeerzeugers (20) und möglichst lange Aktivierungszeiten des zweiten Wärmeerzeugers (80) aufweisen.

12. Verfahren nach einem der vorhergehenden Ansprüche,
**dadurch gekennzeichnet, dass** ein zweites Ventil (100) die Auswahl zwischen einer ersten (101) und einer zweiten Entnahmestelle (102) ermöglicht.

13. Verfahren nach einem der vorhergehenden Ansprüche,
**dadurch gekennzeichnet, dass** ein erstes Ventil (65) das Fluid (2) bei einer Vorlauftemperatur VT ≤ T3 durch einen Bypass (64) zurück zum ersten Wärmeerzeuger (20) leitet, und bei VT ≥ T3 das Fluid (2) in den Pufferspeicher (10) leitet.

14. Heizeinrichtung (1) mit einem Pufferspeicher (10) mit einer thermischen Isolation (4), einem ersten Wärmeerzeuger (20), dessen Heizleistung veränderbar ist, sowie einer ersten Pumpe (21), die mit einer Mess- und Regeleinrichtung (3) verbunden sind, **dadurch gekennzeichnet, dass** wenigstens ein erster, zweiter und dritter Temperaturfühler (30, 31, 32) im und/oder am Pufferspeicher (10) in unterschiedlicher Höhe (36, 37, 38) positioniert und mit der Mess- und Regeleinrichtung (3) verbunden sind.

15. Heizeinrichtung (1) nach Anspruch 14,
**dadurch gekennzeichnet, dass** die Mess- und Regeleinrichtung (3) mit einem Vorlauftemperaturfühler (50) verbunden ist, der an einer von dem ersten Wärmeerzeuger (20) abgehenden Leitung (60) angeordnet ist.

16. Heizeinrichtung (1) nach einem der Ansprüche 14 oder 15,
**dadurch gekennzeichnet, dass** der erste Wärmeerzeuger (20) eine Heizung für fossile Energieträger und/oder eine Wärmepumpe ist.

17. Heizeinrichtung (1) nach einem der Ansprüche 14 bis 16,
**dadurch gekennzeichnet, dass** die Mess- und Regeleinrichtung (3) mit wenigstens einem ersten Ventil (65) verbunden ist.

18. Heizeinrichtung (1) nach einem der Ansprüche 14 bis 17,
**dadurch gekennzeichnet, dass** die Mess- und Regeleinrichtung (3) mit wenigstens einem zweiten Wärmeerzeuger (80) verbunden ist, der insbesondere mit Solarenergie oder mit anderen regenerativen Ressourcen betrieben wird.

19. Heizeinrichtung (1) nach Anspruch 18,
**dadurch gekennzeichnet, dass** der zweite Wärmeerzeuger (80) einen Fluidkreislauf (81) hat, bestehend aus einer zweite Pumpe (82) und einem Wärmetauscher (83), der insbesondere im Pufferspeicher (10) liegt.

20. Heizeinrichtung (1) nach einem der Ansprüche 14 bis 19,
**dadurch gekennzeichnet, dass** die Mess- und Regeleinrichtung (3) mit weiteren Temperaturfühlern verbunden ist, insbesondere mit einem Rücklauftemperaturfühler (91).
